(19) Europäisches Patentamt
European Patent Office
Office européen des brevets

(11) Numéro de publication : **0 070 772**
**B1**

# (12) FASCICULE DE BREVET EUROPÉEN

(45) Date de publication du fascicule du brevet : **15.05.85**

(51) Int. Cl.[4] : **C 03 C 13/00**

(21) Numéro de dépôt : **82401327.0**

(22) Date de dépôt : **15.07.82**

(54) **Composition de verre convenant à la fabrication de fibres.**

(30) Priorité : **20.07.81 FR 8114060**
**03.02.82 FR 8201695**

(43) Date de publication de la demande :
**26.01.83 Bulletin 83/04**

(45) Mention de la délivrance du brevet :
**15.05.85 Bulletin 85/20**

(84) Etats contractants désignés :
**AT BE CH DE FR GB IT LI LU NL SE**

(56) Documents cités :
**FR-A- 1 356 354**
**FR-A- 2 318 832**
**CHEMICAL ABSTRACTS, vol. 88, 1978, page 246, no. 77981v, Columbus, Ohio, USA**
**CHEMICAL ABSTRACTS, vol. 89, 1978, page 285, no. 184615w, Columbus, Ohio, USA JP-A-78 56207 (NIPPON SHEET GLASS CO., LTD.) 22-05-1978**

(73) Titulaire : **ISOVER SAINT-GOBAIN**
**Les Miroirs 18, avenue d'Alsace**
**F-92400 Courbevoie (FR)**

(72) Inventeur : **Massol, Jean-Jacques**
**23 bis rue Bokanowski**
**F-92600 Asnières (FR)**
Inventeur : **Sainte-Foi, Daniel**
**St Germer 56 rue Maurice Duchemin**
**F-60600 Clermont (FR)**

(74) Mandataire : **Breton, Jean-Claude et al**
**SAINT-GOBAIN RECHERCHE 39, quai Lucien Lefranc**
**F-93300 Aubervilliers Cedex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 070 772 B1

**Description**

La présente invention concerne des verres susceptibles d'être fibrés, notamment par l'action de fluides sous pression.

Elle a plus spécialement pour objet des verres susceptibles d'être étirés sous forme de fibres discontinues, par l'action d'un fluide sur des filets de verre issus d'une multiplicité d'orifices.

Les compositions de verre couramment employées pour la fabrication de fibres discontinues résultent d'un compromis entre les propriétés souhaitées desdites fibres et les contraintes imposées par les procédés industriels. Le procédé le plus utilisé consiste à alimenter en verre fondu un corps creux qui tourne à grande vitesse. Ce corps présente une paroi périphérique perforée de nombreux orifices au travers desquels le verre est projeté horizontalement sous l'action de la force centrifuge. Il se forme ainsi des fibres primaires qui sont ensuite étirées de haut en bas par l'action de flammes ou d'un courant gazeux. La nature de la matière utilisée pour fabriquer le corps creux impose des verres dont les caractéristiques permettent le fibrage à des températures inférieures à 1 200 °C.

Des compositions de ce type sont décrites en particulier dans le brevet français publié sous le numéro 1 355 739.

Les fibres obtenues à partir de ces verres traditionnels sont utilisées pour fabriquer de nombreux produits isolants qui donnent toute satisfaction lorsqu'ils sont soumis à des températures relativement peu élevées ne dépassant guère 400 °C ; au-delà de 450 °C, ces produits se dégradent assez rapidement par suite d'une modification structurale des verres qui se traduit matériellement par un affaissement plus ou moins prononcé desdits produits provoquant notamment une diminution importante de leurs propriétés isolantes.

L'obtention de produits isolants qui présenteraient une meilleure résistance à l'affaissement consécutif à une sollicitation thermique, passe donc nécessairement par l'emploi de verres qui commencent à se ramollir à des températures plus élevées que les verres traditionnels.

Certaines solutions ont déjà été proposées, telle que l'emploi de verres élaborés à partir de roches basaltiques ou reproduisant la composition de ces produits naturels. Ces verres sont généralement fibrés par des procédés tels que ceux utilisant la centrifugation du verre fondu nappé sur une roue tournant à grande vitesse ou l'étirage par fluide de filets de verre issus d'une filière en alliage de platine.

Ces verres plus résistants à l'action de la chaleur possèdent effectivement des températures de transformation $T_g$ (qui correspondent sensiblement à une viscosité $\eta$ exprimée en poise, ou en déci Pascal seconde, telle que $\log \eta = 13$) d'au moins 650 °C environ pur les verres traditionnels.

Toutefois ces verres contiennent une forte teneur en oxydes de fer, souvent supérieure à 8 % en poids, ce qui n'est pas sans présenter certains inconvénients : il est connu que l'élaboration de ces verres, faite dans des fours électriques munis d'électrodes en molybdène provoque une usure accélérée desdites électrodes. il est également connu que les verres possédant une forte teneur en fer sont difficiles à homogénéiser en température et donc en viscosité ce qui se traduit au fibrage par la formation d'un plus grand nombre de défauts connus sous le nom de « perles » de verre.

Pour sa part, le brevet FR-A-1 356 354 décrit des compositions de verre, destinées à la fabrication de fibres, qui appartiennent au système $SiO_2$-$Al_2O_3$-CaO-$Li_2O$ ; ces verres peuvent contenir en outre un assez grand nombre d'oxydes, notamment PbO, ZnO, $TiO_2$, $B_2O_3$, BaO, MgO $Na_2O$, $K_2O$. Ces verres présentent une très bonne résistance chimique tout en étant susceptibles d'être transformés en fibres à une température relativement basse. La teneur en CaO, ainsi que la présence ou l'absence éventuelles de certains éléments, ne permettent pas d'obtenir une température de transition particulièrement élevée.

La présente invention a pour objet des compositions pour fibres de verre qui présentent une température de transformation Tg élevée et des températures relativement faibles aux viscosités pratiquement utilisables pour le fibrage, sans présenter les inconvénients des verres connus.

La présente invention a également pour objet des compositions pour fibres de verre qui présentent tout à la fois des températures relativement faibles aux viscosités pratiquement utilisables pour le fibrage et un écart suffisamment grand entre la température du liquidus et ces températures.

La description suivante exposera de manière détaillée les caractéristiques et les avantages de ces compositions.

L'invention consiste essentiellement en des verres sous forme de fibres dont les compositions comprennent les oxydes suivants selon les pourcentages pondéraux ainsi définis :

| | |
|---|---|
| $SiO_2$ | 37 à 48 % |
| $Al_2O_3$ | 17 à 25 % |
| CaO | 23 à 33 % |
| MgO | 0,1 à 7 % |
| $Fe_2O_3$ | 0,1 à 3 % |
| $Na_2O$ | 2 à 8 % |
| $K_2O$ | 0,1 à 7 % |
| Impuretés | inférieures à 3 % |

La somme des teneurs en oxydes formateurs de réseau, à savoir la silice et l'alumine, doit être maintenue entre 55 et 65 % en poids. Ceci permet notamment d'obtenir des verres dont la teneur en oxydes formateurs est suffisamment élevée pour assurer une bonne aptitude au fibrage sans pour autant augmenter trop fortement la viscosité. Dans ce contexte, l'élévation des températures correspondant aux très grandes viscosités, notamment $T_g$, est obtenue en maintenant le rapport $Al_2O_3/SiO_2$ de préférence supérieure à 0,4.

La somme des oxydes alcalino-terreux, représentés en majeure partie par la chaux, doit être maintenue entre 24 et 34 %. Au-dessous de 24 % la température $T_g$ commence à diminuer sensiblement ; au-dessus de 34 % l'écart entre la température de fibrage et la température de liquidus est alors trop faible pour obtenir de bonnes conditions de fibrage. La teneur en chaux est maintenue à une valeur inférieure ou égale à 33 % car au-delà, l'action corrosive de cet oxyde notamment sur les réfractaires constituant les parois des fours de fusion du verre devient trop forte.

Par rapport aux verres de basalte l'incorporation d'une forte teneur en chaux permet tout à la fois d'obtenir des températures de fibrage sensiblement identiques et de maintenir à un niveau élevé les températures correspondant aux fortes viscosités, en particulier $T_g$.

Dans les verres selon l'invention, lorsqu'on augmente la quantité de magnésie au détriment de la chaux, en maintenant constante la somme des pourcentages pondéraux de ces deux oxydes, la température $T_g$ décroit. Pour cette raison, la magnésie doit être introduite en assez faible quantité, essentiellement pour contenir la dévitrification du verre dans des limites acceptables.

Dans cette perspective, les compositions de verre les plus satisfaisantes sont celles pour lesquelles le rapport MgO/CaO demeure inférieure à 0,2.

L'incorporation d'oxydes alcalins et d'oxyde de fer, ce dernier en faible quantité, permet d'ajuster la viscosité à haute température sans diminuer notablement la température $T_g$.

Le domaine préféré des compositions de verres selon l'invention est défini par les limites pondérales suivantes :

| | |
|---|---|
| $SiO_2$ | 38 à 44 % |
| $Al_2O_3$ | 17,5 à 22 % |
| CaO | 25 à 29 % |
| MgO | 0,1 à 5 % |
| $Fe_2O_3$ | 0,5 à 2,5 % |
| $Na_2O$ | 2 à 6 % |
| $K_2O$ | 0,1 à 6 % |
| Impuretés | inférieures à 3 % |

Dans ce domaine préféré la somme des teneurs en silice et en alumine est de préférence comprise entre 58 et 62 % ; ceci permet, en plus du rôle joué par ces oxydes et exposé précédemment, d'améliorer les caractéristiques de dévitrification.

Dans ce domaine également la somme des oxydes alcalinoterreux est comprise de préférence entre 25 et 32 %. D'autre part la somme chaux + alumine est maintenue de préférence entre 45 et 50 %. Ces différentes limitations permettent également de modérer la dévitrification en maintenant la température supérieure de dévitrification au-dessous de 1 300 °C.

La somme des teneurs en oxydes alcalins doit être supérieure à 5 % et, de préférence, inférieure à 11 %, ce qui permet de concilier au mieux le maintien d'une température $T_g$ aussi élevée que possible et l'ajustement des températures correspondant aux viscosités convenant au fibrage.

L'influence de ces différents oxydes est mise en évidence par les différents verres donnés à titre d'exemples dans le tableau I en annexe.

Les fibres de verre selon l'invention peuvent être obtenues selon différents procédés et dispositifs connus de l'homme de l'art ; ainsi elles peuvent être obtenues par étirage par fluide de filets de verre issus d'une multiplicité d'orifices fixes. il faut souligner que les compositons de verre selon l'invention sont tout particulièrement adaptées aux procédé et dispositif tels que décrits notamment dans le brevet français publié sous le numéro 2 223 318.

Les verres selon l'invention présentent des températures de transformation $T_g$ sensiblement égales à celles des verres de basalte qui sont au moins égales à 650 °C. Grâce à cette caractéristique les fibres obtenues à partir des verres selon l'invention peuvent être utilisées pour la fabrication de produits susceptibles d'être portés à des températures élevées, qui, pour des produits isolants, avoisinent 700 °C sans changement notable de leur forme et de leurs dimensions.

C'est ce que démontre l'une des méthodes mises au point pour tester la résistance à la température des produits fibreux et définir leur domaine d'utilisation.

Cette méthode normalisée (norme DIN 52 271) consiste pour l'essentiel, à exercer une pression donnée sur un matelas de fibres présentant une masse volumique connue, à soumettre l'ensemble à différentes températures, et à déterminer la température pour laquelle on constate un affaissement de 5 % dudit matelas.

Les résultats, rassemblés dans le tableau II en annexe, ont été obtenus à partir de matelas fibreux présentant une masse volumique de 100 kg/m$^3$, soumis à une pression de 981 N/m$^2$.

Ces résultats montrent que les verres selon l'invention, illustrés par l'exemple 1, présentent une remarquable résistance à la température en comparaison d'un certain nombre de verres connus (exemple 2 à 5), notamment par rapport à un verre du type basalte (exemple 4).

D'une manière générale, les verres selon l'invention, grâce à leurs propriétés intrinsèques et grâce à leur adaptation à des procédé et dispositif de fibrage particulièrement performants, tels que ceux précités, permettent d'obtenir des produits fibreux d'excellente qualité et aptes à de nombreuses applications. Ainsi le bon comportement des fibres, décrit précédemment, se traduit également par une bonne tenue aux vibrations à haute température et permet d'obtenir d'excellents produits isolants acoustiques aux températures élevées.

Dans le domaine de l'isolation thermique industrielle, les fibres selon l'invention sont avantageusement utilisées sous la forme de panneaux géométriquement bien définis, rigidifiés par un liant polymérisé, ou sous la forme de produits tubulaires destinés à l'isolation de canalisations et appelés couramment coquilles.

Les fibres selon l'invention peuvent être utilisées également sous forme de matelas cousus sur du carton ou du grillage métallique, ou sous forme de bourrelets, ou même en vrac par remplissage.

Les fibres selon l'invention peuvent entrer dans la constitution d'éléments anti-feu comme les parois coupe-feu par exemple.

Les fibres selon l'invention peuvent également entrer dans la constitution de silencieux disposés sur et/ou à l'intérieur de conduites de fluides transportés à haute température.

D'une façon générale, les fibres selon l'invention remplacent avantageusement un certain nombre de fibres connues dans bon nombre d'applications comme agents de renforcement de produits semi-rigides ou de produits rigides susceptibles d'être portés à des températures élevées.

Tableau I

| Oxydes | Ex. 1 | Ex. 2 | Ex. 3 | Ex. 4 | Ex. 5 | Ex. 6 |
|---|---|---|---|---|---|---|
| $SiO_2$ | 42,3 | 39,4 | 38 | 40,7 | 40,1 | 42,4 |
| $Al_2O_3$ | 18,5 | 18,9 | 23,8 | 17,9 | 20,1 | 18,0 |
| CaO | 27,7 | 28,7 | 27 | 31,8 | 27,7 | 24,8 |
| MgO | 0,3 | 0,6 | 0,4 | 1,2 | 0,5 | 2,8 |
| $Fe_2O_3$ | 1,7 | 1,9 | 1,7 | 1,9 | 1,8 | 1,6 |
| $Na_2O$ | 4,3 | 4,6 | 3,9 | 2,6 | 4,2 | 3,7 |
| $K_2O$ | 4,3 | 5 | 4,3 | 3,1 | 4,8 | 4,7 |
| Impuretés | 0,9 | 0,9 | 0,9 | 0,8 | 0,8 | 2,0 |
| Tg | 682 | 682 | 693 | 691 | 681 | 677 |
| Température (°C) correspondant à : | | | | | | |
| 1 000 poises (100 Pa.s) | 1 143 | 1 118 | 1 172 | 1 126 | 1 136 | 1 133 |
| 100 poises ( 10 Pa.s) | 1 300 | 1 267 | 1 324 | 1 265 | 1 285 | 1 300 |
| 50 poises ( 5 Pa.s) | 1 363 | 1 329 | 1 390 | 1 323 | 1 348 | 1 375 |
| Liquidus (°C) | 1 230 | 1 280 | 1 330 | 1 280 | 1 260 | 1 240 |
| Vitesse maximale de croissance ($u.mn^{-1}$) | 13,3 | 29 | 31,6 | 33 | 20 | 29,8 |
| Température (°C) correspondant à la vitesse maximale | 1 150 | 1 050 | 1 135 | 1 115 | 1 100 | 1 100 |

Tableau II

| Oxydes | N° 1 Fibre de verre selon l'invention | N° 2 Fibre de verre connue | N° 3 Fibre de roche | N° 4 Fibre de basalte | N° 5 Fibre de laitier |
|---|---|---|---|---|---|
| $SiO_2$ | 42,3 | 64,6 | 47,0 | 45,9 | 41,4 |
| $Al_2O_3$ | 18,5 | 2,9 | 14,6 | 12,9 | 11,7 |
| CaO | 27,7 | 6,5 | 18,4 | 10,5 | 40,6 |
| MgO | 0,3 | 3,0 | 8,5 | 9,3 | 4,0 |
| $Fe_2O_3$ | 1,7 | 0,4 | 6,5 | 12,6 | 0,8 |
| $Na_2O$ | 4,3 | 13,8 | 2,6 | 3,1 | — |
| $K_2O$ | 4,3 | 1,0 | 0,5 | 1,2 | — |
| $TiO_2$ | — | — | — | 2,8 | — |
| MnO | — | — | — | — | 0,7 |

Tableau II (Suite)

| Oxydes | N° 1 Fibre de verre selon l'invention | N° 2 Fibre de verre connue | N° 3 Fibre de roche | N° 4 Fibre de basalte | N° 5 Fibre de laitier |
|---|---|---|---|---|---|
| $B_2O_3$ | — | 5,0 | — | — | — |
| BaO | — | 2,4 | — | — | — |
| ZnO | — | — | 1,5 | — | — |
| Impuretés | 0,9 | 0,4 | 0,4 | 1,7 | 0,8 |
| Température d'affaissement (5 %) | 675 °C | 515 °C | 640 °C | 650 °C | 700 °C |

**Revendications**

1. Fibre de verre, caractérisée en ce que sa composition renferme les oxydes suivants selon les limites et les relations ci-après, exprimées en pourcentages pondéraux :

| | |
|---|---|
| $SiO_2$ | 37 à 48 % |
| $Al_2O_3$ | 17 à 25 % |
| CaO | 23 à 33 % |
| MgO | 0,1 à 7 % |
| $Fe_2O_3$ | 0,1 à 3 % |
| $Na_2O$ | 2 à 8 % |
| $K_2O$ | 0,1 à 7 % |
| Impuretés | inférieures à 3 % |

la somme des teneurs en silice et en alumine étant maintenue entre 55 et 65 %, la somme des oxydes alcalino-terreux étant comprise entre 24 et 34 % et la somme des oxydes alcalins restant supérieure à 5 %.

2. Fibre de verre selon la revendication 1, caractérisée en ce que le rapport $Al_2O_3$ : $SiO_2$ est supérieur à 0,4.

3. Fibre de verre selon la revendication 1, caractérisée en ce que le rapport MgO : CaO est inférieur à 0,2.

4. Fibre de verre selon l'une des revendications précédentes, caractérisée en ce qu'elle renferme pondéralement :

| | |
|---|---|
| $SiO_2$ | 38 à 44 % |
| $Al_2O_3$ | 17,5 à 22 % |
| CaO | 25 à 29 % |
| MgO | 0,1 à 5 % |
| $Fe_2O_3$ | 0,5 à 2,5 % |
| $Na_2O$ | 2 à 6 % |
| $K_2O$ | 0,1 à 6 % |

la somme des pourcentages des oxydes alcalino-terreux demeurant inférieure ou égale à 32 %.

5. Fibre de verre selon la revendication 4, caractérisée en ce que la somme $SiO_2 + Al_2O_3$ est comprise entre 58 et 62 %.

6. Fibre de verre selon la revendication 4, caractérisée en ce que la somme $Al_2O_3$ + CaO est comprise entre 45 et 50 %.

7. Fibre selon la revendication 4, caractérisée en ce que la somme des oxydes alcalins $Na_2O + K_2O$ est égale ou inférieure à 11 %.

8. Fibre de verre selon l'une des revendications 1 à 7, caractérisée en ce que sa composition pondérale est la suivante :

| | |
|---|---|
| $SiO_2$ | 42,3 % |
| $Al_2O_3$ | 18,5 % |
| CaO | 27,7 % |
| MgO | 0,3 % |
| $Fe_2O_3$ | 1,7 % |
| $Na_2O$ | 4,3 % |
| $K_2O$ | 4,3 % |
| Impuretés | 0,9 % |

9. Fibre de verre selon l'une des revendications 1 à 7, caractérisée en ce que sa composition pondérale est la suivante :

| | |
|---|---|
| $SiO_2$ | 39,4 % |
| $Al_2O_3$ | 18,9 % |
| CaO | 28,7 % |
| MgO | 0,6 % |
| $Fe_2O_3$ | 1,9 % |
| $Na_2O$ | 4,6 % |
| $K_2O$ | 5 % |
| Impuretés | 0,9 % |

10. Utilisation des fibres de verre, définies selon l'une des revendications précédentes, dans la fabrication de produits pour l'isolation thermique.

11. Utilisation des fibres de verre, définies selon l'une des revendications 1 à 9, dans la fabrication de produits tubulaires ou coquilles.

12. Utilisation des fibres de verre, définies selon l'une des revendications 1 à 9, dans la fabrication de panneaux.

13. Utilisation des fibres de verre, définies selon l'une des revendications 1 à 9, dans la fabrication de produits rigides ou semi-rigides.

14. Utilisation des fibres de verre, définies selon l'une des revendications 1 à 9, dans des éléments coupe-feu.

15. Utilisation des fibres de verre, définies selon l'une des revendications 1 à 9, dans la fabrication de produits pour l'isolation acoustique.

16. Utilisation des fibres de verre définies selon l'une des revendications 1 à 9, dans des éléments de silencieux disposés sur et/ou à l'intérieur de conduites de fluides transportés à haute température.

**Claims**

1. Glass fibre characterised in that its composition contains the following oxides according to the limits and the relationships given hereinafter, expressed in percentages by weight :

| | |
|---|---|
| $SiO_2$ | 37 to 48 % |
| $Al_2O_3$ | 17 to 25 % |
| CaO | 23to 33 % |
| MgO | 0.1 to 7 % |
| $Fe_2O_3$ | 0.1 to 3 % |
| $Na_2O$ | 2 to 8 % |
| $K_2O$ | 0.1 to 7 % |
| Impurities | less than 3 % |

the sum of the silica and alumina contents being maintained between 55 and 65 %, the sum of the alkaline earth oxides being between 24 and 34 % and the sum of the alkali metal oxides being greater than 5 %.

2. Glass fibre according to claim 1, characterised in that the $Al_2O_3 : SiO_2$ ratio is greater than 0.4.

3. Glass fibre according to claim 1, characterised in that the MgO : CaO ratio is less than 0.2.

4. Glass fibre according to any of the preceding claims, characterised in that it contains by weight :

| | |
|---|---|
| $SiO_2$ | 38 to 44 % |
| $Al_2O_3$ | 17.5 to 22 % |
| CaO | 25 to 29 % |
| MgO | 0.1 to 5 % |
| $Fe_2O_3$ | 0.5 to 2.5 % |
| $Na_2O$ | 2 to 6 % |
| $K_2O$ | 0.1 to 6 % |

the sum of the percentages of the alkaline earth oxides remaing less than or equal to 32 %.

5. Glass fibre according to claim 4, characterised in that the sum $SiO_2 + Al_2O_3$ is between 58 and 62 %.

6. Glass fibre according to claim 4, characterised in that the sum $Al_2O_3$ + CaO is between 45 and 50 %.

7. Fibre according to claim 4, characterised in that the sum of the alkali metal oxides $Na_2O + K_2O$ is equal to or less than 11 %.

8. Glass fibre according to any one of claims 1 to 7, characterised in that its composition by weight is as follows :

| | |
|---|---|
| $SiO_2$ | 42.3 % |
| $Al_2O_3$ | 18.5 % |
| CaO | 27.7 % |
| MgO | 0.3 % |
| $Fe_2O_3$ | 1.7 % |
| $Na_2O$ | 4.3 % |
| $K_2O$ | 4.3 % |
| Impurities | 0.9 % |

9. Glass fibre according to any one of claims 1 to 7, characterised in that its composition by weight is as follows :

| | |
|---|---|
| $SiO_2$ | 39.4 % |
| $Al_2O_3$ | 18.9 % |
| CaO | 28.7 % |
| MgO | 0.6 % |
| $Fe_2O_3$ | 1.9 % |
| $Na_2O$ | 4.6 % |
| $K_2O$ | 5 % |
| Impurities | 0.9 % |

10. Utilisation of glass fibres, defined according to any one of the preceding claims, in the manufacture of products for thermal insulation.

11. Utilisation of glass fibres, defined according to any one of claims 1 to 9, in the manufacture of tubular or shell products.

12. Utilisation of glass fibres, defined according to any one of claims 1 to 9, in the manufacture of panels.

13. Use of glass fibres defined according to any one of claims 1 to 9, in the manufacture of rigid or semi-rigid products.

14. Use of glass fibres, defined according to any one of claims 1 to 9, in fire-break elements.

15. Use of glass fibres, defined according to any one of claims 1 to 9, in the manufacture of products for acoustic insulation.

16. Use of glass fibres, defined according to any one of claims 1 to 9, in noise suppression elements arranged on and/or inside conduits for fluids transported at high temperatures.

**Patentansprüche**

1. Glasfaser, gekennzeichnet durch folgende Zusammensetzung an Oxiden :

| | |
|---|---|
| $SiO_2$ | 37-48 Gew.-% |
| $Al_2O_3$ | 17-25 Gew.-% |
| CaO | 23-33 Gew.-% |
| MgO | 0,1-7 Gew.-% |
| $Fe_2O_3$ | 0,1-3 Gew.-% |
| $Na_2O$ | 2-8 Gew.-% |
| $K_2O$ | 0,1-7 Gew.-% |
| Verunreinigungen unterhalb | 3 Gew.-% |

wobei die Summe des Silizium- und Aluminiumgehalts zwischen 55 und 65 Gew.-% liegt, die Summe der Erdalkalioxide zwischen 24 und 35 Gew.-% und die Summe der Alkalioxide oberhalb 5 Gew.-% liegt.

2. Glasfaser nach Anspruch 1, dadurch gekennzeichnet, daß das Verhältnis von $Al_2O_3$ zu $SiO_2$ oberhalb 0,4 liegt.

3. Glasfaser nach Anspruch 1, dadurch gekennzeichnet, daß das Verhältnis von MgO zu CaO unterhalb 0,2 liegt.

4. Glasfaser nach einem der vorhergehenden Ansprüche, gekennzeichnet durch folgende Zusammensetzung :

| | |
|---|---|
| $SiO_2$ | 38-44 Gew.-% |
| $Al_2O_3$ | 17,5-22 Gew.-% |
| CaO | 25-29 Gew.-% |
| MgO | 0,1-5 Gew.-% |
| $Fe_2O_3$ | 0,5-2,5 Gew.-% |
| $Na_2O$ | 2-6 Gew.-% |
| $K_2O$ | 0,1-6 Gew.-% |

wobei die Summe der prozentualen Bestandteile der Erdalkalioxide kleiner oder gleich 32 Gew.-% ist.

5. Glasfaser nach Anspruch 4, dadurch gekennzeichnet, daß die Summe von $SiO_2$ und $Al_2O_3$ zwischen 58 und 62 Gew.-% liegt.

6. Glasfaser nach Anspruch 4, dadurch gekennzeichnet, daß die Summe von $Al_2O_3$ und CaO zwischen 45 und 50 Gew.-% liegt.

7. Glasfaser nach Anspruch 4, dadurch gekennzeichnet, daß die Summe der Alkalioxide $Na_2O$ und $K_2O$ gleich oder kleiner 11 Gew.-% ist.

8. Glasfaser nach einem der Ansprüche 1-7, gekennzeichnet durch folgende Zusammensetzung :

| | |
|---|---|
| $SiO_2$ | 42,3 Gew.-% |
| $Al_2O_3$ | 18,5 Gew.-% |
| CaO | 27,7 Gew.-% |
| MgO | 0,3 Gew.-% |
| $Fe_2O_3$ | 1,7 Gew.-% |
| $Na_2O$ | 4,3 Gew.-% |
| $K_2O$ | 4,3 Gew.-% |
| Verunreinigungen | 0,9 Gew.-% |

9. Glasfaser nach einem der Ansprüche 1-7, gekennzeichnet durch folgende Zusammensetzung.

| | |
|---|---|
| $SiO_2$ | 39,4 Gew.-% |
| $Al_2O_3$ | 18,9 Gew.-% |
| CaO | 28,7 Gew.-% |
| MgO | 0,6 Gew.-% |
| $Fe_2O_3$ | 1,9 Gew.-% |
| $Na_2O$ | 4,6 Gew.-% |
| $K_2O$ | 5 Gew.-% |
| Verunreinigungen | 0,9 Gew.-% |

10. Verwendung der Glasfasern nach einem der vorhergehenden Ansprüche zur Herstellung von Produkten für die Wärmedämmung.

11. Verwendung der Glasfasern nach einem der Ansprüche 1-9 zur Herstellung von röhrenförmigen oder schalenförmigen Produkten.

12. Verwendung der Glasfasern nach einem der Ansprüche 1-9 bei der Herstellung von Platten.

13. Verwendung der Mineralfasern nach einem der Ansprüche 1-9 bei der Herstellung von steifen oder halbsteifen Produkten.

14. Verwendung der Glasfasern nach einem der Ansprüche 1-9 in feuerhemmenden Elementen.

15. Verwendung der Glasfasern nach einem der Ansprüche 1-9 bei der Herstellung von Produkten zur Schalldämmung.

16. Verwendung der Glasfasern nach einem der Ansprüche 1-9 in Schalldämpfelemente, welche außerhalb und/oder innerhalb von Heißflüssigkeitsleitungen angeordnet sind.